(19) Europäisches Patentamt
European Patent Office
Office européen des brevets

(11) **EP 4 033 700 A1**

(12) **EUROPEAN PATENT APPLICATION**
published in accordance with Art. 153(4) EPC

(43) Date of publication:
**27.07.2022 Bulletin 2022/30**

(51) International Patent Classification (IPC):
***H04L 12/24*** *(2006.01)*

(21) Application number: **20877967.8**

(22) Date of filing: **16.09.2020**

(86) International application number:
**PCT/CN2020/115602**

(87) International publication number:
**WO 2021/073343 (22.04.2021 Gazette 2021/16)**

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**KH MA MD TN**

(30) Priority: **14.10.2019 CN 201910975121**

(71) Applicants:
• **ZTE Corporation**
  **Shenzhen, Guangdong 518057 (CN)**
• **Tsinghua University**
  **Beijing-shi 100084 (CN)**

(72) Inventors:
• **HAN, Jing**
  **Shenzhen, Guangdong 518057 (CN)**
• **ZHANG, Baisheng**
  **Shenzhen, Guangdong 518057 (CN)**

• **CHEN, Li**
  **Shenzhen, Guangdong 518057 (CN)**
• **LIU, Jianwei**
  **Shenzhen, Guangdong 518057 (CN)**
• **DONG, Xinyou**
  **Shenzhen, Guangdong 518057 (CN)**
• **YANG, Fan**
  **Shenzhen, Guangdong 518057 (CN)**
• **CAO, Liang**
  **Shenzhen, Guangdong 518057 (CN)**
• **YU, Feng**
  **Shenzhen, Guangdong 518057 (CN)**
• **LI, Weiyang**
  **Shenzhen, Guangdong 518057 (CN)**
• **WANG, Dezheng**
  **Shenzhen, Guangdong 518057 (CN)**

(74) Representative: **Betten & Resch**
**Patent- und Rechtsanwälte PartGmbB**
**Maximiliansplatz 14**
**80333 München (DE)**

(54) **METHOD AND APPARATUS FOR ANALYZING ROOT CAUSE OF FAILURE OF COMMUNICATION SYSTEM, SYSTEM AND COMPUTER STORAGE MEDIUM**

(57)    A method and apparatus for analyzing the root cause of a failure of a communication system, a system and a computer-readable storage medium are disclosed, the method includes: acquiring a real-time value of a target Key Performance Indicator, KPI, variable of a communication system and real-time values of a plurality of observed variables of the communication system; inputting the real-time values of the plurality of observed variables into a prediction model to obtain a predicted value of the target KPI variable; comparing the obtained predicted value of the target KPI variable and the real-time value of the target KPI variable; in response to a determination that deterioration in performance of the communication system occurs, calculating contribution of each observed variable to the deterioration in performance of the system; and selecting top K places of cause variables as candidate root cause variables of degradation in performance of the communication system.

EP 4 033 700 A1

Acquire a real-time value of a target KPI variable of a communication system and a real-time value of each of a plurality of observed variables of the communication system
— S110

Input each real-time value of each of the plurality of observed variables into a prediction model, to generate a predicted value of the target KPI variable, and generate the prediction model through training of history data of the communication system by a predetermined algorithm
— S120

Compare the generated predicted value of the target KPI variable with the real-time value of the target KPI variable
— S130

Calculate contribution of each observed variable to resulted deterioration in performance of the system in response to a determination that deterioration in performance of the communication system occurs
— S140

Select top K places of cause variables in a list of contributions of the observed variable ranked by their values in descending order, as candidate root cause variables of degradation in performance of the communication system
— S150

Monitor a real-time value of each observed variable, and perform a determination as to whether or not each real-time value exceeds a predetermined control limit
— S160

Determine K candidate root cause variables as the final root cause variables, in response to, a determination that the number of times that a real-time value of each candidate root cause variable exceeding a corresponding control limit is greater than a predetermined number of times and/or the time when a real-time value of each candidate root cause variable exceeding the corresponding control limit is earlier than other observed variables
— S170

FIG. 1

**Description**

**CROSS-REFERENCE TO RELATED APPLICATION**

This application is filed on the basis of the Chinese patent application No. 201910975121.0 filed October 14, 2019, and claims priority of the Chinese patent application, the entire contents of which are incorporated herein by reference.

**TECHNICAL FIELD**

The present disclosure relates to the field of communication, and in particular to a method for analyzing root cause of a failure of a communication system, a device for analyzing root cause of a failure of a communication system, a system for performing the method for analyzing root cause of a failure, and a computer-readable storage medium.

**BACKGROUND**

Changes will be inevitably made to a communication system during operation and maintenance of a communication network. Deterioration may occur to a Key Performance Indicator (KPI) after a change is made to a communication system. It is ineffective for those technicians to find out the causes for the deterioration in the performance of the communication system from a large number of observed variables.
Therefore, it is important to efficiently find out the cause of the deterioration in performance of the communication system.

**SUMMARY**

The present disclosure provides a method for analyzing root cause of a failure of a communication system, a device for analyzing root cause of a failure of a communication system, a system for performing the method for analyzing root cause of a failure, and a computer-readable storage medium. It is possible to effectively find out the cause of the degradation in performance of the communication system by means of the method for analyzing root cause of a failure.
According to an aspect of the present disclosure, there is provided a method for analyzing root cause of a failure in a communication system, including, acquiring a real-time value of a target KPI variable of a communication system and a real-time value of each of a plurality of observed variables of the communication system; inputting each real-time value of each of the plurality of observed variables into a prediction model, to generate a predicted value of the target KPI variable, wherein the prediction model is generated through training of history data of the communication system by a predetermined algorithm; performing a comparison on the generated predicted value of the target KPI variable with the real-time value of the target KPI variable; in response to a determination that deterioration in performance of the communication system occurs, calculating contribution of each observed variable to resulted deterioration in performance of the system, wherein the deterioration in performance of the communication system satisfies at least following predetermined condition, a difference between a predicted value of the target KPI variable and a real-time value of the target KPI variable exceeds a predetermined value; and selecting top K places of cause variables from a list of contributions of the observed variable ranked by their values in descending order, as candidate root cause variables of the degradation in performance of the communication system, where K is a positive integer.
According to another aspect of the present disclosure, there is provided a system for performing root cause analysis on a communication system, including, an offline device storing a prediction model for predicting KPI variables obtained by training of history data of the communication system with a predetermined algorithm; and on line device configured to, perform a real-time monitoring on a KPI variable of the communication system to generate a real-time KPI variable; perform a comparison on the predicted KPI variable output by the prediction model with the real-time KPI variable; in response to a determination that deterioration in performance of the communication system occurs, calculate contribution of each observed variable to deterioration of the real-time KPI variable, wherein the deterioration in performance of the communication system satisfies at least following predetermined condition, a difference between the predicted KPI variable and the real-time KPI variable exceeds a predetermined value; and select top K places of cause variables from a list of contributions of the observed variable ranked by their values in descending order, as candidate root cause variables of the degradation in the real-time KPI variable, where K is a positive integer.
According to yet another aspect of the present disclosure, there is provided a computer-readable storage medium storing an executable program thereon, which when executed by a processor, causes the processor to carry out the above-mentioned method for analyzing root cause of a failure.
According to yet another aspect of the present disclosure, there is provided a device for analyzing root cause of a failure of a communication system, including a processor, and a memory storing an executable program thereon, which when executed by the processor, causes the processor to carry out the above-mentioned method for analyzing root cause of a failure.

**BRIEF DESCRIPTION OF DRAWINGS**

The accompanying drawings are intended to provide a further understanding of the present invention and constitute a part of the description. The present invention will be illustrated in the following detailed description in conjunction with the drawings which do not constitute a limitation to the present invention. In the drawings:

FIG. 1 shows a flowchart of a method for analyzing root cause of a failure of a communication system according to the present disclosure;
FIG. 2 shows a schematic diagram according to an implementation of S130;
FIG. 3 shows a flowchart of construction of a prediction model;
FIG. 4 shows a block diagram of a system for performing root cause analysis of a failure in a communication system according to the present disclosure;
FIG. 5 shows a diagram depicting a comparison of the predicted values and real-time values of a target KPI before and after a communication system is updated;
FIG. 6 shows a schematic diagram depicting real-time monitoring of a statistic $T^2$;
FIG. 7 shows a schematic diagram depicting a cumulative contribution of each observed variable;
FIG. 8 shows a sequence of alarm raised by contribution of each observed variable; and
FIG. 9 shows a schematic block diagram of a device for analyzing root cause of a failure of a communication system according to the present disclosure.

REFERENCE NUMBER LIST

110: Off line device;
120: On line device;
901: Processor;
902: Memory.

**DETAILED DESCRIPTION**

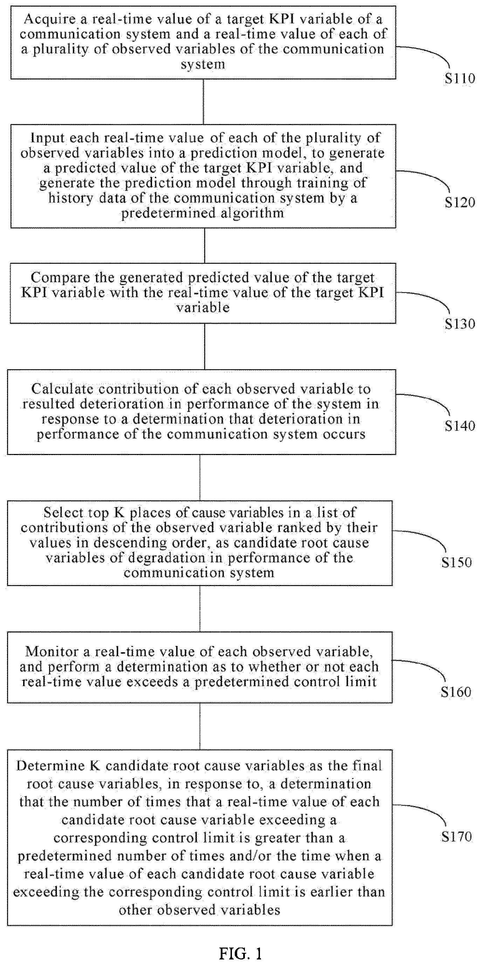

Embodiments of the present invention will be described in the detailed description below in conjunction with the accompanying drawings. It should be understood, however, that the detailed description and specific examples, while indicating exemplary embodiments, are given for purposes of illustration only and not of limitation.
According to an aspect of the present invention, there is provided a method for analyzing root cause of a failure in a communication system. As shown in FIG. 1, the method for analyzing root cause of a failure includes following operations.
In S110, a real-time value of a target KPI variable of a communication system and a real-time value of each of a plurality of observed variables of the communication system are acquired.
In S120, each real-time value of each of the plurality of observed variables is input into a prediction model, to generate a predicted value of the target KPI variable, wherein the prediction model is generated through training of history data of the communication system by a predetermined algorithm.
In S130, the generated predicted value of the target KPI variable is compared with the real-time value of the target KPI variable.
In S140, contribution of each observed variable to the deterioration in performance of the system is calculated in response to a determination that deterioration in performance of the communication system occurs, wherein the deterioration in performance of the communication system satisfies at least the following predetermined condition: a difference between a predicted value of the target KPI variable and a real-time value of the target KPI variable exceeds a predetermined value.
In S150, top K places of cause variables in a list of contributions of the observed variable ranked by their values in descending order, are selected as candidate root cause variables of degradation in performance of the communication system, where K is a positive integer.
It is not intended to limit the generation of a real-time value of a target KPI variable and a real-time value of each of a plurality of observed variables of the communication system in the present disclosure. For example, a real-time value of a target KPI variable and a real-time value of each of a plurality of observed variables may be generated by real-time monitoring of the communication system. For another example, a monitoring device may be used to monitor a communication system in real time, and then a real-time value of a target KPI variable, and a real-time value of each of a plurality of observed variables may be obtained through communication between the monitoring device and a device that performs a method for analyzing root cause of a failure. In some embodiments, by constructing Hotelling statistics, an operating state of a communication system is monitored online to obtain a real-time value of a target KPI variable and a real-time value of each of a plurality of observed variables.

It is not intended to limit a period for collecting the real-time value of the target KPI variable and a period for collecting the real-time value of each observed variable in the present disclosure. For example, real-time values of a target KPI variable and an observed variable are collected at a time interval T. The method for analyzing a root cause of a failure would benefit from a smaller time interval T for a more accurate result. In some embodiments, the time interval T may be set to 15 minutes for a tradeoff between an amount of calculation and accuracy.

Here, the history data of the communication system refers to data obtained before the communication system is updated, including the history values of a target KPI variable and the history values of the observed variables before the communication system is updated. Also, it is necessary to make sure that the communication system is operating properly before the update.

It is possible to have a fast determination as to whether or not a failure occurs to a communication system, through a comparison of a predicted value of a target KPI variable with a real-time value of the target KPI variable. Then, it is possible to have a fast determination on the root cause of the failure that causes deterioration in the performance of the communication system, through a calculation of the contribution of each observed variable to the deterioration of the target KPI variable, without manual troubleshooting, thus improving the efficiency of the root cause analysis of the failure.

It should be noted that, generally an observed variable with the greatest contribution can be considered as the root cause of a failure, but candidate variables of the root cause as generated by the method for analyzing root cause of a failure according to the present disclosure can be referenced by the technicians. It is possible for those technicians to determine a true root cause variable of a failure based on the contribution of each observed variable.

It is not intended to limit to a specific predetermined algorithm in the present disclosure. In some embodiments, the predetermined algorithm includes a partial least squares (PLS) algorithm. For communication systems, there are many related observed variables, so the amount of data involved can be considerable. And a communication system with a large sampling time satisfies the static characteristics of a PLS algorithm. In this application, a more accurate predicted value of a target KPI variable can result from training of the history data of a communication system with a PLS algorithm.

In some embodiments, the method for analyzing a root cause of a failure may further include following operations subsequent to S150, in order to determine the root cause of the failure more accurately.

In S160, a real-time value of each observed variable is monitored, and a determination as to whether or not each real-time value exceeds a predetermined control limit.

In S170, K candidate root cause variables are determined as the final root cause variables, in response to, a determination that the number of times that a real-time value of each candidate root cause variable exceeding a corresponding control limit is greater than a predetermined number of times and/or the time when a real-time value of each candidate root cause variable exceeding the corresponding control limit is earlier than other observed variables.

It is not intended to limit the control limit of each observed variable in the present disclosure, while the control limit can set by a technician based on his/her experience. It is apparent that, the final root cause variables are also for reference by technicians.

It is not intended to specifically limit a value of K in the present disclosure while the value of K can be set by a technician as needed.

In some embodiments, the method for analyzing a root cause of a failure may include following operations for a more accurate prediction.

A statistic is constructed, and operating status of a communication system is monitored online, where the deterioration in performance of the communication system further includes a deviation of the statistic of the communication system (denoted as $T^2$) from a threshold for the statistic (denoted as $T^2_{limit}$) of the communication system.

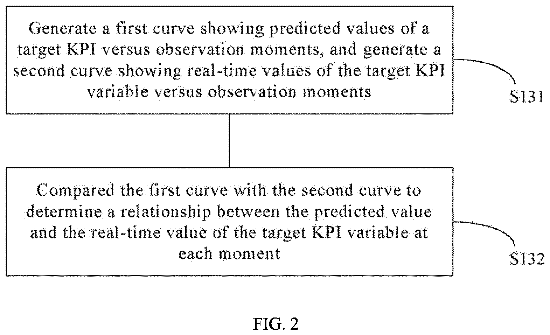

In some embodiments, S130 may include following operations as shown in FIG. 2, in order to provide to maintenance personnel, a fast and visual comparison between a predicted value and a real-time value of a target KPI variable.

In S131, a first curve showing predicted values of a target KPI versus observation moments is generated, and a second curve showing real-time values of the target KPI variable versus observation moments is generated.

In S132, the first curve is compared with the second curve to determine a relationship between the predicted value and the real-time value of the target KPI variable at each moment.

It is not intended to limit to a specified method of sorting the observed variables based on the degree of contribution in the present disclosure. And the observed variables can be sorted based on the contribution through following method.

A momentary contribution of each observed variable at each observation moment within a predetermined period is calculated.

A cumulative contribution of each observed variable within a predetermined period is calculated.

An amount of times that the momentary contribution of each observed variable exceeds a first predetermined contribution within the predetermined period, is accumulated.

An observed variable whose cumulative contribution exceeds a second predetermined contribution within the predetermined period, is determined.

The observed variables having the number of times that a momentary contribution exceeding the first predetermined contribution being greater than a predetermined number of times, while having a cumulative contribution exceeding the second predetermined contribution, are sorted.

According to some embodiments of the present disclosure, both the momentary contribution of each observed variable and the total contribution of the observed variable are taken into account, so that the contribution of each observed variable can be sorted objectively.

In other words, during performing of the method for analyzing a root cause of a failure according to the present disclosure, once a deterioration is found in a target KPI (that is, the communication system fails), the contribution of the observed variables to the deterioration of the KPI in a previous period is analyzed, the variables with a large contribution are identified and selected as the root cause of the failure for the technicians to analyze.

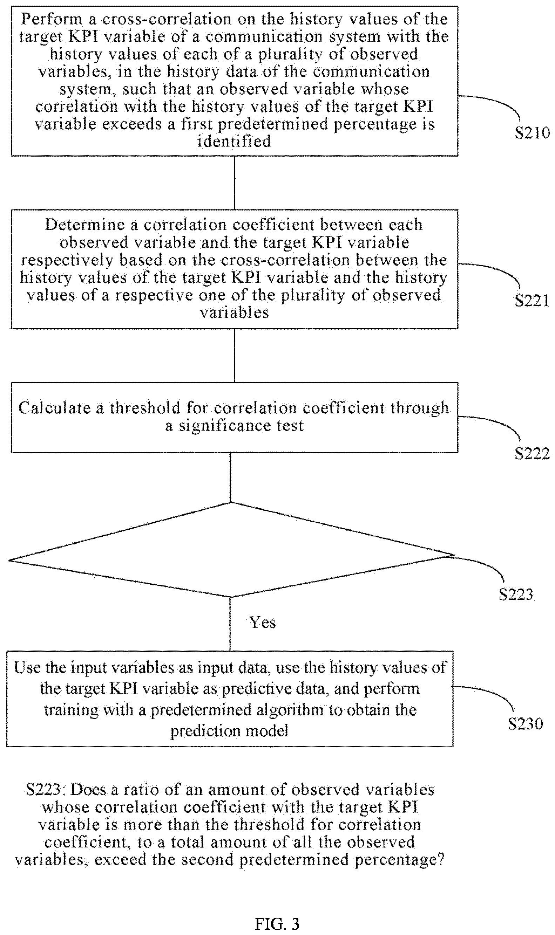

As described above, a prediction model is constructed through a PLS algorithm. In order to reduce the amount of calculation, it is necessary to perform a preprocessing on history data first, and the observed variables that have less correlation with a target KPI variable are excluded. Specifically, as shown in FIG. 3, construction of the prediction model include:

In S210, a cross-correlation is performed on the history values of the target KPI variable of a communication system with the history values of each of a plurality of observed variables, in the history data of the communication system, such that an observed variable whose correlation with the history values of the target KPI variable exceeding a first predetermined percentage (denoted as E%) is identified, and the history values of the observed variable are selected as input variables.

In S230, the input variables are used as input data, the history values of the target KPI variable are used as predictive data, and training is performed with a predetermined algorithm to obtain the prediction model.

By means of S210, the most relevant observed variable to the target KPI variable can be automatically selected from a large number of observed variables, as input data of a PLS algorithm, thereby reducing the amount of calculation during construction of a prediction model.

The inventor of the present application found that most of the effective observed variables of a communication system (that is, the observed variables most related to the target KPI variable) have significant linear correlation characteristics. That is, the communication system is a linear system in which more than a second predetermined percentage (denoted as D%) of effective variables have linear correlation characteristics.

In some embodiments, the first predetermined percentage is no more than the second predetermined percentage (i.e., $E \leqq D$). In some embodiments, the first predetermined percentage E% is ranged from 50% to 70%, and the second predetermined percentage D% is ranged from 70% to 90%.

The PLS algorithm is especially suitable for prediction of a linear system. Therefore, in some embodiments, it is possible to first analyze and determine whether a communication system is a linear system, during construction of a prediction model, in order to improve the accuracy of the prediction. S230 would not be performed unless it is determined that the communication system is a linear system. Specifically, construction of a prediction model further includes the following operations prior to S230.

In S221, a correlation coefficient between each observed variable and the target KPI variable is determined respectively based on the cross-correlation between the history values of the target KPI variable and the history values of a respective one of a plurality of observed variables.

In S222, a threshold for the correlation coefficient is calculated through a significance test.

In S223, a determination is performed as to whether a ratio of the number of observed variables whose correlation coefficient with the target KPI variable is more than the threshold for correlation coefficient, to a total amount of all the observed variables, exceeds the second predetermined percentage.

In response to a positive determination, the communication system is determined as a linear system, then S230 is performed.

In response to a negative determination, the communication system is determined as a non-linear system. In this case, another prediction model may be constructed with some other algorithms.

It is not intended to limit how S221 is performed in the present disclosure.

It is not intended to specifically limit how the correlation coefficient between each observed variable and the target KPI variable is calculated in the present invention. Specifically, calculation of the correlation coefficient between each observed variable and the target KPI variable includes following operations.

A correlation coefficient matrix P between the KPI variable and other observed variables and a delay matrix L are calculated through the cross-correlation. That is, a delay $l$ ($l \in Z$) is introduced for two statistical sequences $x_i$ and $x_j$, where $|l| \leq l_{max}$, and a series of correlation coefficients $\rho_{x_i x_j}(l)$ are calculated with formula (3):

$$\rho_{x_i x_j}(l) = \begin{cases} \frac{1}{k-1}\sum_{m=1}^{k-l}(x_{i_m}-\mu_{x_i})(x_{i_m}-\mu_{x_i})/S_{x_i}S_{x_j}, & l \geq 0 \\ \frac{1}{k+1}\sum_{m=1}^{k-l}(x_{i_m}-\mu_{x_i})(y_{i_m}-\mu_{x_i})/S_{x_i}S_{x_j}, & l < 0 \end{cases} \tag{1}$$

where, k is the length of two statistical sequences;

$S_{xi}$ is the standard deviation of $x_i$;

$S_{xj}$ is the standard deviation of $x_j$;

m is a serial number of the sample.

The maximum value of a series of correlation coefficients $\rho_{xixj}(l)$ obtained by formula (1) is taken and denoted as $p_{ij}$, with a corresponding delay $l_{ij}$.

A threshold for the correlation coefficient is calculated through a significance test in which a statistic T is constructed to obtain the threshold for the correlation coefficient po.

In the case that, more than D% of effective variables have obvious significant correlation characteristics, it is considered that the communication system has obvious linear characteristics and the linear characteristics of the PLS model are satisfied. In general cases, D is ranged from 70%-90%.

The variables with the correlation coefficient in the top E% are selected from a large number of observed variables, as the input of PLS model, where $E \leq D$. The number of observed variables in normal operation state is marked as M and the number of samples of observed variables is marked as N, and data is standardized to generate an input matrix $X=[x_1, x_2,..., x_M] \in R^{N \times M}$, an output vector is $Y=[y_1, y_2,..., y_N]^T \in R^{1 \times N}$. In general cases, E is ranged from 50% to 70%.

A model having output variables as the target KPI variables and input variables as the observed variables is established through a PLS algorithm, specifically:
Data matrix [$X$, $Y$] is projected by the PLS algorithm into a low-dimensional space with fewer latent variables [$t_1, t_2,..., t_A$]:

$$\begin{cases} X=TP^T+E \\ Y=TQ^T+F \end{cases}.$$

In the formula, T=[$t_1, t_2,..., x_A$] $\in R^{N \times A}$ is a score matrix;

P=[$p_1, p_2,..., p_A$] $\in R^{M \times A}$ is a load matrix of X;
Q=[$q_1, q_2,..., q_A$] $\in R^{M \times A}$ is a load matrix of Y;
E is a residual matrix of X;
F is a residual matrix of Y.

A weight matrix R=[ri, $r_2,..., r_A$] $\in R^{M \times A}$ is introduced, such that $T=XR$, and $P^TR=R^TP$, then a prediction model for Y can be written as $\hat{Y} = XRQ^T$.

The following section will describe how to use the prediction model to analyze root cause of a failure.

As mentioned above, a statistic $T^2$ is constructed for monitoring of the operating status of a communication system online.

Each real-time value of the observed variable is input into the above prediction model to generate a prediction variable of a target KPI.

It is considered that deterioration in performance of the communication system occurs, in case that, a real-time value of the target KPI significantly deviates from a prediction variable of the target KPI, and the statistic T$^2$ significantly deviates from a threshold $T^2_{limit}$. The statistic T$^2$ is calculated with formula (2), and the threshold for statistic T$^2$ is calculated with formula (3).

$$T^2 = x^T R \Delta^{-1} R^T x \qquad (2)$$

$$T^2_{\lim it} = \frac{A(N^2 - 1)}{N(N - A)} F_{A, M - A, \alpha} \qquad (3)$$

where,

$$\Delta = \frac{1}{n-1} T^T \quad ;$$

$T$ is a sample covariance of a modeling score;
$\alpha$ is a confidence level;
$N$ is the number of samples used during training of the prediction model using the PLS algorithm;
$n$ is the number of samples used during training of the prediction model using the PLS algorithm;
$A$ is the number of components selected by the PLS algorithm; and
$R$ is a weight matrix.

Once a degradation in performance of the communication system is detected, the contribution of each observed variable to degradation of the target KPI variable over a certain period is calculated. Reconstruction Based Contribution (RBC) is used to observe the contribution of the observed variable $x_i$ to the monitoring indicator T$^2$. Specifically, the contribution RBC can be determined by formula (4):

$$RBC_i = \frac{(\varphi_i^T R \Delta^{-1} R^T x)^2}{\varphi_i^T R \Delta^{-1} \varphi_i} \qquad (4)$$

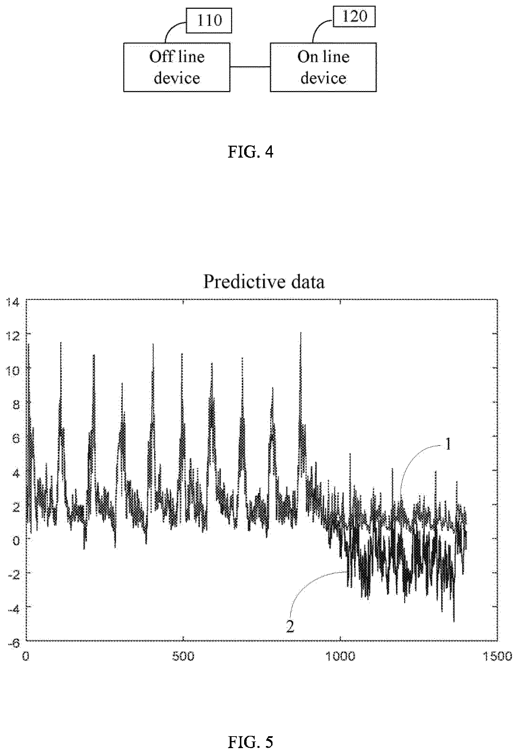

where, $\varphi$ is a failure vector.
According to another aspect of the present disclosure, there is provided a system for performing root cause analysis on a communication system. As shown in FIG. 4, the system includes an offline device 110 and an on line device 120.
A prediction model for predicting KPI variables obtained by training of history data of the communication system with a predetermined algorithm, is stored in the offline device 110.
The on line device 120 is configured to perform the following operations.
Real-time monitoring is performed on a KPI variable of the communication system to generate a real-time KPI variable.
A comparison is performed on the predicted KPI variable output by the prediction model with the real-time KPI variable.
Contribution of each observed variable to deterioration of the real-time KPI variable is calculated in response to a determination that deterioration in performance of the communication system occurs, wherein the deterioration in performance of the communication system satisfies at least the following predetermined condition: a difference between the predicted KPI variable and the real-time KPI variable exceeds a predetermined value.
Top K places of cause variables in a list of contributions of the observed variable ranked by their values in descending order, are selected as candidate root cause variables of the degradation in the real-time KPI variable, where K is a positive integer.
In some embodiments, the prediction model is constructed by the off line device 110 can with the following operations.
A cross-correlation is performed on the history values of the target KPI variable of a communication system with the history values of each of a plurality of observed variables, in the history data of the communication system, such that an observed variable whose correlation with the history values of the target KPI variable exceeding a first predetermined percentage is identified, and the history values of the observed variable are selected as input variables.

The input variables are used as input data, the history values of the target KPI variable are used as predictive data, and training is performed with a predetermined algorithm to obtain the prediction model.

In some embodiments, the predetermined algorithm is a PLS algorithm.

According to yet another aspect of the present disclosure, there is provided a computer-readable storage medium storing an executable program thereon, which when executed by a processor, causes the processor to carry out the above-mentioned method for analyzing root cause of a failure according to the present disclosure.

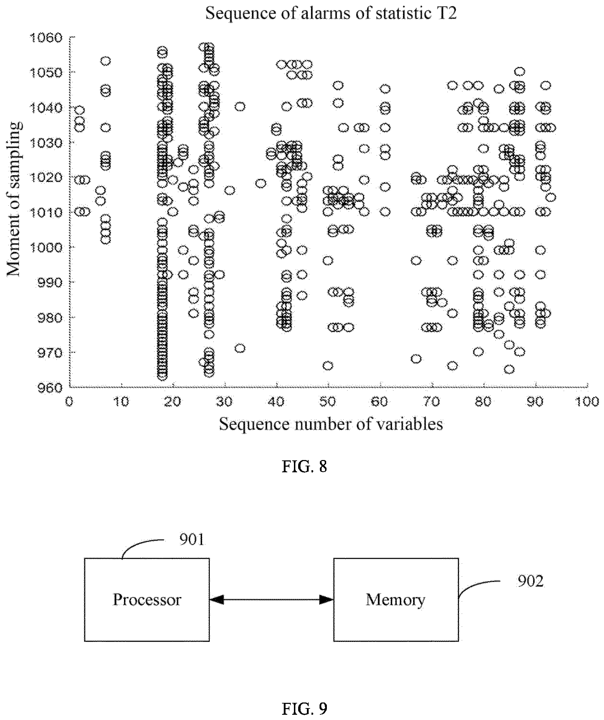

According to yet another aspect of the present disclosure, there is provided a device for analyzing root cause of a failure of a communication system. As shown in FIG. 9, the device includes a processor 901, and a memory 902 storing an executable program thereon, which when executed by the processor 901, causes the processor 901 to carry out the above-mentioned method for analyzing root cause of a failure according to the present disclosure.

The computer-readable storage media includes volatile and nonvolatile, removable and non-removable media implemented in any method or technology for storing information such as computer-readable instructions, data structures, program modules or other data. The computer-readable storage media include, but are not limited to, RAM, ROM, EEPROM, flash memory or other memory technologies, CD-ROM, digital versatile disks (DVD) or other optical disk storage, magnetic boxes, tapes, magnetic disk storage or other magnetic storage media, or any other media that can be used to store desired information and can be accessed by a computer.

The following part will illustrate in detail how the method for analyzing root cause of a failure operates, by way of an example of analysis of base station data of an example cell. The following description is presented only by way of an example showing how the method for analyzing root cause of a failure according to the present disclosure operates, but this is not a real case.

There are a total of 201 variables to be observed in the example cell, and one target KPI variable is used to evaluate the performance of the system. The sampling interval for the observed data is 15 minutes, and data of a total of 10 days under a normal operating condition are collected. 92 observed variable sequences and 1 KPI variable sequence are generated with blank data sequence and constant data sequence removed.

Cross-correlation analysis shows that the correlation threshold for a statistic T is 0.24, and 89 out of 92 variables exceed the correlation threshold, thus it can be considered that the system satisfied linear characteristics.

Top 65% of variables of the correlation coefficient are selected as input of the PLS algorithm, and 60 input variables are generated.

A prediction model for the target KPI is established by a PLS algorithm.

A monitoring indicator $T^2$ is constructed for real-time monitoring of the system.

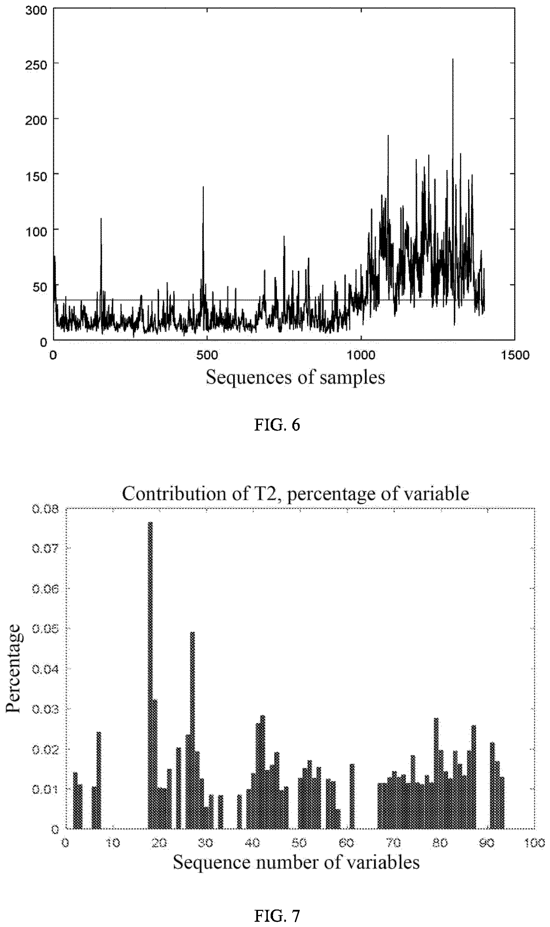

The result of real-time monitoring is shown in FIG. 5, with data of 10 days normal operation before upgrading, and data of 7 days after upgrading. X-coordinate of FIG. 5 represents a time sequence, in which, number 500 represents the 500th data collected in the time sequence, number 1000 represents the 1000th data collected in the time sequence, and number 1500 represents the 1500th data collected in time sequence. And Y-coordinate represents values of the target KPI. The indicator line 1 is a line of predictive data in performance, and the indicator line 2 is a line for real-time data in performance. It is noted that deterioration in performance of the upgraded system occurs from 960th sampled data, as reflected in predictive data. As shown in FIG. 6, the monitoring indicator $T^2$ (that is, statistic $T^2$) exceeds the control limit. X-coordinate of FIG. 6 represents a time sequence, in which, number 500 represents the 500th data collected in the time sequence, number 1000 represents the 1000th data collected in the time sequence, and number 1500 represents the 1500th data collected in time sequence. And Y-coordinate represents statistical values of the target KPI. The horizontal line in the chart area is the control limit of the statistic $T^2$, and the curve is the monitoring value of the $T^2$indicator). Thus, it is necessary to analyze the contribution of each variable to the statistical indicator.

A one-day duration is taken for analysis, that is, 96 sampled data is taken. As shown in FIG. 7, top five (i.e., K equals to 5 in this case) observed variables with the highest cumulative contribution are given by the system for performing root cause analysis, they are variables No. 18, No. 27, No. 19, No. 42 and No. 79. It can be seen from FIG. 7 that, variable No. 18 has the highest cumulative contribution, and thus, variable No. 18 is considered to be the root cause of the failure. Meanwhile, analysis is performed on the contribution for each variable separately. An alarm is raised each time when a contribution exceeds a control limit. Also, it is shown in FIG. 8 that, variable No. 18 has the greatest number of alarms, and variable No. 18 initiated an alarm first, and thus it can be considered that variable No. 18 causes propagation of the failure.

In some embodiments of the method for analyzing root cause for a failure according to the present disclosure, predicted values of a target KPI can be generated by construction of a prediction model. It is possible to have a fast determination as to whether or not a failure occurs to a communication system, through a comparison of a predicted value of a target KPI variable with a real-time value of the target KPI variable. Then, it is possible to have a fast determination on the root cause of the failure that causes deterioration in the performance of the communication system, through a calculation of the contribution of each observed variable to the deterioration of the target KPI variable, without manual troubleshooting, thus improving the efficiency of the root cause analysis of the failure.

It shall be understood that the above implementations are intended to illustrate the operation of the present invention by way of example and not of limitation. It shall be understood by a person having ordinary skills in the art that, many changes and modifications within the scope of this invention may be made without departing from the scope thereof, and the scope of this invention includes all such changes and modifications.

**Claims**

1. A method for analyzing root cause of a failure of a communication system, comprising:

   acquiring a real-time value of a target KPI variable of a communication system and a real-time value of each of a plurality of observed variables of the communication system;
   inputting each real-time value of each of the plurality of observed variables into a prediction model, to generate a predicted value of the target KPI variable, wherein the prediction model is generated through training of history data of the communication system by a predetermined algorithm;
   performing a comparison on the generated predicted value of the target KPI variable with the real-time value of the target KPI variable;
   in response to a determination that deterioration in performance of the communication system occurs, calculating contribution of each observed variable to the deterioration in performance of the system, wherein the deterioration in performance of the communication system satisfies at least following predetermined condition, a difference between a predicted value of the target KPI variable and a real-time value of the target KPI variable exceeds a predetermined value; and
   selecting top K places of cause variables from a list of contributions of the observed variable ranked by their values in descending order, as candidate root cause variables of degradation in performance of the communication system, where K is a positive integer.

2. The method according to claim 1, wherein acquiring a real-time value of a target KPI variable of a communication system and a real-time value of each of a plurality of observed variables of the communication system comprises: constructing a statistic, and performing online monitoring on an operation status of the communication system, to acquire a real-time value of a target KPI variable of the communication system and a real-time value of each of a plurality of observed variables of the communication system, wherein the deterioration in performance of the communication system further comprises a deviation of the statistic of the communication system from a threshold for the statistic of the communication system.

3. The method according to claim 1, wherein performing a comparison on the generated predicted value of the target KPI variable with the real-time value of the target KPI variable comprises:

   generating a first curve showing predicted values of a target KPI variable versus observation moments, and a second curve showing real-time values of the target KPI variable versus observation moments; and
   performing a comparison on the first curve with the second curve to determine a relationship between the predicted value and the real-time value of the target KPI variable at each moment.

4. The method according to any one of claims 1 to 3, wherein, the method, prior to selecting top K places of cause variables from a list of contributions of the observed variable ranked by their values in descending order, as candidate root cause variables of degradation in performance of the communication system, further comprises,

   calculating a momentary contribution of each observed variable at each observation moment within a predetermined period;
   calculating a cumulative contribution of each observed variable within a predetermined period;
   accumulating a number of times that the momentary contribution of each observed variable exceeds a first predetermined contribution within the predetermined period;
   identifying an observed variable whose cumulative contribution exceeds a second predetermined contribution within the predetermined period; and
   sorting each observed variable having a number of times that a momentary contribution exceeding a first predetermined contribution being greater than a predetermined number of times, while having a cumulative contribution exceeding a second predetermined contribution.

5. The method according to any one of claims 1 to 4, wherein the predetermined algorithm is a partial least squares algorithm.

**6.** The method according to claim 5, wherein the prediction model is constructed by,

performing a cross-correlation on the history values of the target KPI variable of the communication system with the history values of each of a plurality of observed variables, in the history data of the communication system, such that an observed variable whose correlation with the history values of the target KPI variable exceeding a first predetermined percentage is identified, and the history values of the observed variable are selected as input variables; and

using the input variables as input data, using the history values of the target KPI variable as predictive data, and performing training with the predetermined algorithm to obtain the prediction model.

**7.** The method according to claim 6, wherein the communication system is a linear system in which more than a second predetermined percentage of effective variables have linear correlation characteristics, and the first predetermined percentage is no more than the second predetermined percentage.

**8.** The method according to claim 7, wherein construction of the prediction model, prior to using the input variables as input data, using the history values of the target KPI variable as predictive data, and performing training with the predetermined algorithm to obtain the prediction model, further comprises,

determining a correlation coefficient between each observed variable and the target KPI variable respectively based on cross-correlation between the history values of the target KPI variable and the history values of a respective one of the plurality of observed variables;

calculating a threshold for correlation coefficient through a significance test;

performing a determination as to whether a ratio of a number of observed variables whose correlation coefficient with the target KPI variable being greater than the threshold for correlation coefficient, to a total number of all the observed variables, exceeds the second predetermined percentage; and

in response to a determination that the ratio exceeds the second predetermined percentage, using the history values of the target KPI variable as predictive data, and performing the training with the predetermined algorithm to obtain the prediction model.

**9.** The method according to any one of claims 1 to 3, wherein the method, subsequent to selecting top K places of cause variables from a list of contributions of the observed variable ranked by their values in descending order, as candidate root cause variables of degradation in performance of the communication system, further comprises,

performing monitoring on a real-time value of each observed variable, and performing a determination as to whether or not each real-time value exceeds a predetermined control limit; and

determining K candidate root cause variables as final root cause variables, in response to, a determination that a number of times that a real-time value of each candidate root cause variable exceeding a corresponding control limit is greater than a predetermined number of times and a time when a real-time value of each candidate root cause variable exceeding the corresponding control limit is earlier than other observed variables.

**10.** The method according to any one of claims 1 to 3, wherein the method, subsequent to selecting top K places of cause variables from a list of contributions of the observed variable ranked by their values in descending order, as candidate root cause variables of degradation in performance of the communication system, further comprises,

performing monitoring on a real-time value of each observed variable, and performing a determination as to whether or not each real-time value exceeds a predetermined control limit; and

determining K candidate root cause variables as final root cause variables, in response to, a determination that the number of times that a real-time value of each candidate root cause variable exceeding a corresponding control limit is greater than a predetermined number of times, or a time when a real-time value of each candidate root cause variable exceeding the corresponding control limit is earlier than other observed variables.

**11.** A system for analyzing root cause of a failure in a communication system, comprising:

an off line device storing a prediction model for predicting KPI variables obtained by training of history data of the communication system with a predetermined algorithm; and

an on line device configured to,

perform real-time monitoring on a KPI variable of the communication system to generate a real-time KPI variable;

perform a comparison on the predicted KPI variable output by the prediction model with the real-time KPI variable;

in response to a determination that deterioration in performance of the communication system occurs, calculate contribution of each observed variable to deterioration of the real-time KPI variable, wherein the deterioration in performance of the communication system satisfies at least following predetermined condition, a difference between the predicted KPI variable and the real-time KPI variable exceeds a predetermined value; and

select top K places of cause variables from a list of contributions of the observed variable ranked by their values in descending order, as candidate root cause variables of the degradation in the real-time KPI variable, where K is a positive integer.

12. The system according to claim 11, wherein the predetermined algorithm is a partial least squares algorithm.

13. A computer-readable storage medium storing an executable program, which when executed by a processor, causes the processor to carry out the method according to any one of claims 1 to 10.

14. A device for analyzing root cause of a failure of a communication system, comprising a processor, and a memory storing an executable program, which when executed by the processor, causes the processor to carry out the method according to any one of claims 1 to 10.

Acquire a real-time value of a target KPI variable of a communication system and a real-time value of each of a plurality of observed variables of the communication system

S110

Input each real-time value of each of the plurality of observed variables into a prediction model, to generate a predicted value of the target KPI variable, and generate the prediction model through training of history data of the communication system by a predetermined algorithm

S120

Compare the generated predicted value of the target KPI variable with the real-time value of the target KPI variable

S130

Calculate contribution of each observed variable to resulted deterioration in performance of the system in response to a determination that deterioration in performance of the communication system occurs

S140

Select top K places of cause variables in a list of contributions of the observed variable ranked by their values in descending order, as candidate root cause variables of degradation in performance of the communication system

S150

Monitor a real-time value of each observed variable, and perform a determination as to whether or not each real-time value exceeds a predetermined control limit

S160

Determine K candidate root cause variables as the final root cause variables, in response to, a determination that the number of times that a real-time value of each candidate root cause variable exceeding a corresponding control limit is greater than a predetermined number of times and/or the time when a real-time value of each candidate root cause variable exceeding the corresponding control limit is earlier than other observed variables

S170

FIG. 1

Generate a first curve showing predicted values of a target KPI versus observation moments, and generate a second curve showing real-time values of the target KPI variable versus observation moments

S131

Compared the first curve with the second curve to determine a relationship between the predicted value and the real-time value of the target KPI variable at each moment

S132

FIG. 2

Perform a cross-correlation on the history values of the target KPI variable of a communication system with the history values of each of a plurality of observed variables, in the history data of the communication system, such that an observed variable whose correlation with the history values of the target KPI variable exceeds a first predetermined percentage is identified

S210

Determine a correlation coefficient between each observed variable and the target KPI variable respectively based on the cross-correlation between the history values of the target KPI variable and the history values of a respective one of the plurality of observed variables

S221

Calculate a threshold for correlation coefficient through a significance test

S222

S223

Yes

Use the input variables as input data, use the history values of the target KPI variable as predictive data, and perform training with a predetermined algorithm to obtain the prediction model

S230

S223: Does a ratio of an amount of observed variables whose correlation coefficient with the target KPI variable is more than the threshold for correlation coefficient, to a total amount of all the observed variables, exceed the second predetermined percentage?

FIG. 3

FIG. 4

FIG. 5

FIG. 6

FIG. 7

FIG. 8

FIG. 9

## INTERNATIONAL SEARCH REPORT

| International application No. |
| --- |
| **PCT/CN2020/115602** |

| A. CLASSIFICATION OF SUBJECT MATTER |
| --- |
| H04L 12/24(2006.01)i |
| According to International Patent Classification (IPC) or to both national classification and IPC |

| B. FIELDS SEARCHED |
| --- |
| Minimum documentation searched (classification system followed by classification symbols) |
| H04L |
| Documentation searched other than minimum documentation to the extent that such documents are included in the fields searched |
| |
| Electronic data base consulted during the international search (name of data base and, where practicable, search terms used) |
| CNKI, CNPAT, EPODOC, WPI, IEEE, GOOGLE: 性能, 故障, 变差, 分析, 根因, 预测, 历史数据, 观测, 变量, 关键性能指标, KPI, monitor, diagnosis, fault, predictive, key, root cause, history data |

| C. DOCUMENTS CONSIDERED TO BE RELEVANT | | |
| --- | --- | --- |
| Category* | Citation of document, with indication, where appropriate, of the relevant passages | Relevant to claim No. |
| PX | CN 110635952 A (ZTE CORPORATION et al.) 31 December 2019 (2019-12-31) description, paragraphs [0004]-[0045], and figures 1-4 | 1-14 |
| X | GE, Zhiqiang. "Distributed predictive modeling framework for prediction and diagnosis of key performance index in plant-wide processes" *Journal of Process Control*, No. 65, 19 October 2017 (2017-10-19), sections 1-3 | 1-14 |
| A | US 2013318011 A1 (JONES, Michael Jeffrey et al.) 28 November 2013 (2013-11-28) entire document | 1-14 |
| A | CN 109063886 A (ALIBABA GROUP HOLDING LIMITED) 21 December 2018 (2018-12-21) entire document | 1-14 |
| A | CN 109710983 A (PEKING UNIVERSITY) 03 May 2019 (2019-05-03) entire document | 1-14 |
| A | CN 104537260 A (TSINGHUA UNIVERSITY) 22 April 2015 (2015-04-22) entire document | 1-14 |

☐ Further documents are listed in the continuation of Box C.    ☑ See patent family annex.

| * Special categories of cited documents: | "T" later document published after the international filing date or priority date and not in conflict with the application but cited to understand the principle or theory underlying the invention |
| --- | --- |
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
| --- | --- |
| **09 November 2020** | **27 November 2020** |

| Name and mailing address of the ISA/CN | Authorized officer |
| --- | --- |
| **China National Intellectual Property Administration (ISA/CN)** **No. 6, Xitucheng Road, Jimenqiao Haidian District, Beijing 100088** **China** | |
| Facsimile No. **(86-10)62019451** | Telephone No. |

Form PCT/ISA/210 (second sheet) (January 2015)

**INTERNATIONAL SEARCH REPORT**
Information on patent family members

International application No.

**PCT/CN2020/115602**

| Patent document cited in search report | | | Publication date (day/month/year) | Patent family member(s) | | | Publication date (day/month/year) |
|---|---|---|---|---|---|---|---|
| CN | 110635952 | A | 31 December 2019 | None | | | |
| US | 2013318011 | A1 | 28 November 2013 | JP | 2013246818 | A | 09 December 2013 |
| CN | 109063886 | A | 21 December 2018 | None | | | |
| CN | 109710983 | A | 03 May 2019 | None | | | |
| CN | 104537260 | A | 22 April 2015 | None | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 201910975121